# EUROPEAN PATENT APPLICATION

(11) **EP 1 353 303 A1**
(43) Date of publication of application: **15.10.2003**
(21) Application number: 02078895.6
(22) Date of filing: 22.08.2002
(51) Int. Cl.: G07F 7/10

(54) **A method of assigning an account to a new identification device**

(30) Priority: 10.04.2002 EP 02076419
(71) Applicant: SCHLUMBERGER Systèmes, 92120 Montrouge (FR)
(72) Inventor: Barbe, Serge, c/o Schlumberger Systèmes, 92542 Montrouge Cedex (FR); Joffray, Olivier, c/o Schlumberger Systèmes, 92542 Montrouge Cedex (FR)
(74) Representative: den Braber, Gerard Paul

(57) **Abstract**

An account is assigned to a new identification device. The account has previously been assigned to an old identification device that comprises an identification data and a key. The account is assigned in the following manner. In a result-calculation step, the old identification device calculates a result on the basis of an input data and the key. In a linking step, the result calculated by the old identification device and the identification data of the old identification device are made available to a communication device. Furthermore, the new identification device is coupled to the communication device. In a transfer step, a communication is established between the communication device to which the new identification device is coupled, and an account center. This causes the account center to assign the account to the new identification device.

## Description

A method of assigning an account to a new identification device.

### CONTEXT

The invention relates to assigning an account to a new identification device, the account having previously been assigned to an old identification device that comprises an identification data and a key. The invention may be applied, for example, in the field of cellular phone networks. A GSM cellular phone network recognizes, as it were, a particular subscriber by means of a subscriber identity module (SIM). The SIM thus constitutes an identification device that comprises identification data (IMSI) and a key (Kc).

### INVENTION

In a result-calculation step, the old identification device calculates a result on the basis of an input data and the key.

In a linking step, the result calculated by the old identification device and the identification number of the old identification device are made available to a communication device. In addition, the new identification device is coupled to the communication device.

In a transfer step, a communication is established between the communication device to which the new identification device is coupled, and an account center, which causes the account center to assign the account to the new identification device.

### ADVANTAGE

The invention allows flexibility. The new identification device need not be assigned in advance to a particular account. The new identification device can be distributed and sold "anonymously". A subscriber who buys such a new identification device can personalize the device and then assign the new identification device to his account in accordance with the invention.

### DETAILS

There are numerous possible implementations of the invention. For example, it is possible to insert an old SIM and a new SIM in a reader. The new SIM contains a random number. The reader reads this random number from the new SIM. The reader applies the random number to the old SIM with an instruction known as "RUN GSM algorithm". In response, the old SIM calculates a result (SRES). The reader reads the SRES and writes the SRES into the new SIM. In addition, the reader reads the IMSI from the old SIM and writes the IMSI into the new SIM. Furthermore, the reader can copy certain personal data from the old SIM to the new SIM. For example, the reader can copy a personal phone book contained in the old SIM to the new SIM. The subscriber inserts the new SIM, which comprises the IMSI and the SRES of the old SIM, into his cellular phone. The subscriber switches on his cellular phone, which causes the new SIM to send its IMSI to the cellular network operator he is subscribed to.

The cellular network operator recognizes the IMSI as one belonging to a SIM destined to replace a previous SIM. The cellular network operator reads the IMSI of the old SIM and the SRES originating from the old SIM. This allows the cellular network operator to make a secure link between the old SIM and the new SIM. The cellular network operator can then assign the account that belonged to the old SIM to the new SIM. In addition, he may decouple the account from the old SIM.

In an alternative embodiment, the old SIM is coupled to a personal computer (PC), which can communicate with the cellular network operator via, for example, the Internet. The cellular phone operator applies a random number to the old SIM with the RUN GSM algorithm. The old SIM calculates an SRES. The PC reads the SRES and the IMSI of the old SIM and stores these two data. Subsequently, the new SIM is coupled to the PC. The new SIM sends its IMSI to the cellular network operator. The cellular network operator recognizes the IMSI as one belonging to a SIM destined to replace a previous SIM. The cellular network operator reads from the PC the IMSI of the old SIM and the SRES originating from the old SIM. This allows the cellular network operator to make a secure link between the old SIM and the new SIM. The cellular network operator can then assign the account that belonged to the old SIM to the new SIM. In addition, he may decouple the account from the old SIM.

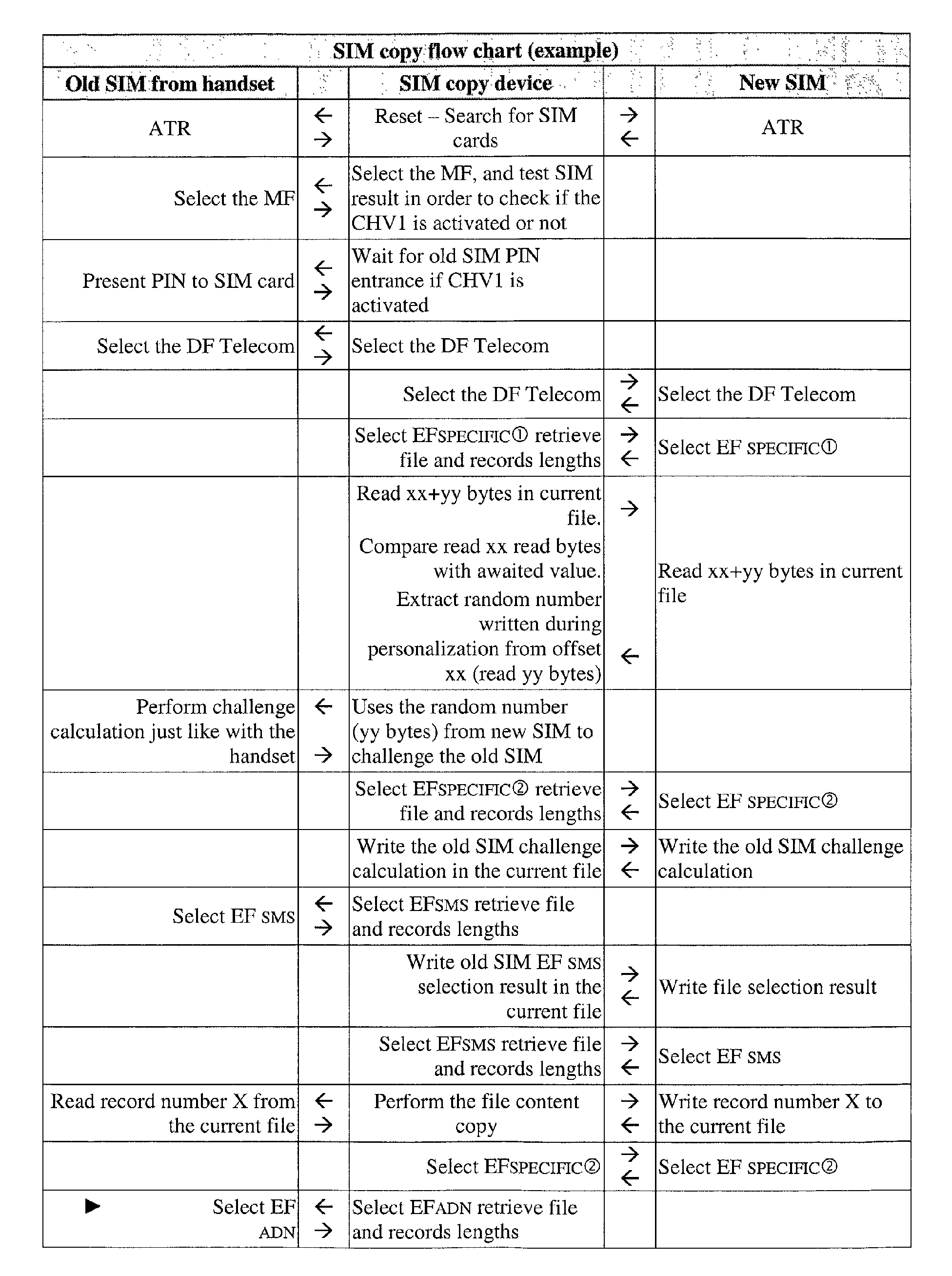

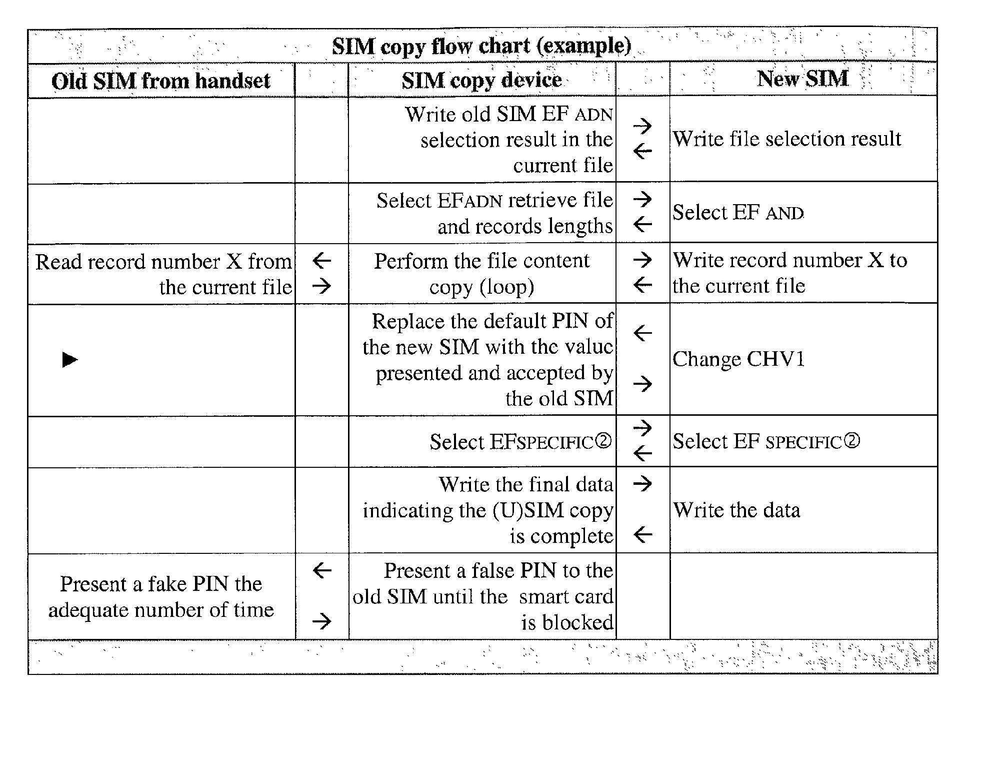

### 1 Piloting the SIM copy device

This chapter describes the APDU required to pilot the SIM copy function in the electronic device.

The manner these commands are coded (byte code) in the new SIM is not the purpose of this document.

### 1.1 Structuring a scripting application

The scripting application of the SIM copy device is made of three types of entity:
1. The commands related to the smart cards.
2. The commands related to the interaction with the user.
3. The messages.

These 3 categories might be combined to have command displaying a message, waiting for an action from the customer, and sending an APDU to a smart card.

The coding of all these elements is fully depending on the device manufacturer choices (i.e. the byte code).

### 1.2 Defining what is a command

A command or function as defined here below is not always a single smart card APDU. It might be a combination of APDUs, and may include user interactions (displaying a message, waiting for a PIN entrance ...).

This document describes the device characteristics for the SIM copy function. Of course, the commands might vary for another application.

### 1.3 Defining what is a message

Messages are defined outside of the commands. Some message might be display under certain circumstances, when an error appends for instance. These messages will be described later on.

The manner a message is coded is not the purpose of this document, and is under the responsibility of the device manufacturer. This principle is applicable to many different circumstances.

For example, it might be interesting to customize messages format depending on the design of the LCD screen. Instead of translating a UNICODE message on the flow to the value to write in the registers of the LCD screen, it is more interesting to pre calculate the correct registers value, then the translation is no more required.

### 1.4 Device reaction when a command fails

Some commands might be mandatory, some other might not.

The distinction is done by adding a parameter to all commands, indicating whether it is mandatory or not.

### Failure on a command not compulsorily successful:

A failure forces the script to jump to next milestone. Milestones are populated over the scripts in order to identify the important steps. Having found the next milestones, the device continues the script execution by executing the next command. If no more milestones are found, treatment applied on compulsorily successful commands is engaged.

### Failure on a compulsorily successful command:

A compulsorily successful command failure induces the immediate termination of the script, displaying the error message.

### Interpreting the smart card status words:

- SW1-SW2 = 90-00 → Continue normally
- SW1-SW2 = 9F-xx → Retrieve xx bytes using the GET RESPONSE command.
- Any other value → Command failure: process to treatment as described here above.

### 1.5 Pre required environment

The commands described here are to be used in scripts. Thus, is required to have some internal variables to store intermediate results. These variables are:
- A → 20 bytes long binary buffer
- B → 20 bytes long binary buffer
- GRR → GetResponse command result

There is no need to be able to perform arithmetic calculations to complete the SIM copy function. By the way, more sophisticated application might require such new commands to be included. There are to be described when needs will occur, but not in this document.

### 1.6 Commands list

The following table briefly describes the commands and their parameters. By the way, most of them require indicating also the following:
- The smart card slot where to apply the command.
- A Boolean value indicating if the command must compulsorily be successful or not.

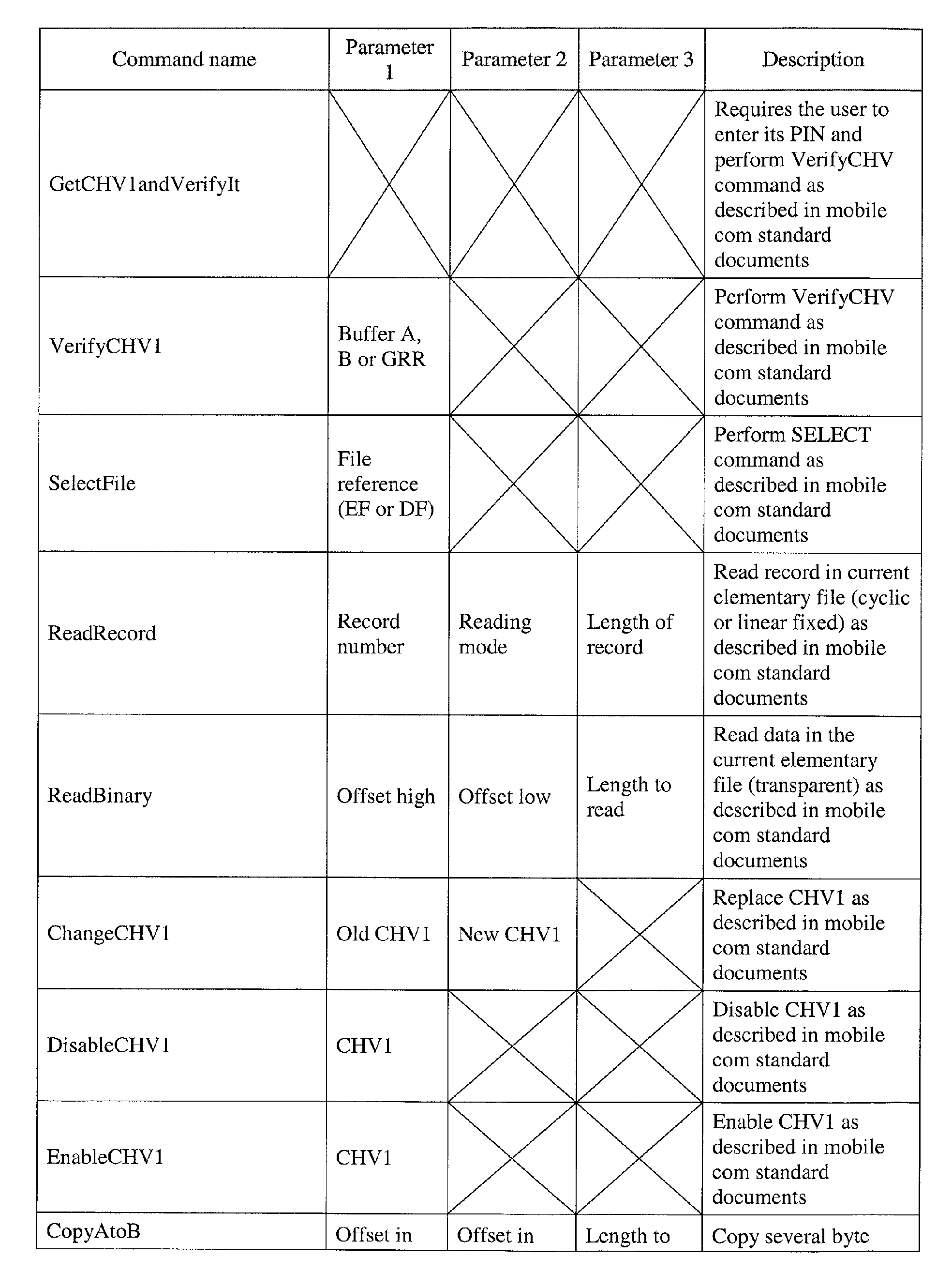

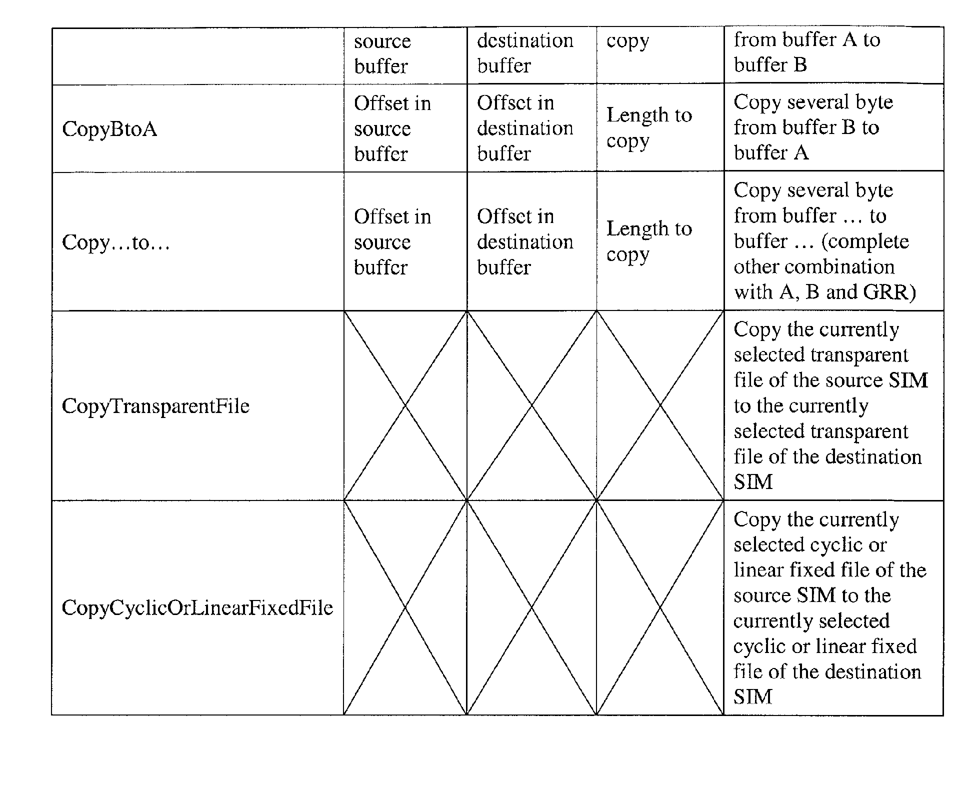

## Claims

1. A method of assigning an account to a new identification device, the account having previously been assigned to an old identification device that comprises an identification data and a key, the method comprising:
- a result-calculation step in which the old identification device calculates a result on the basis of an input data and the key;
- a linking step in which the result calculated by the old identification device and the identification data of the old identification device are made available to a communication device, and in which the new identification device is coupled to the communication device; and
- a transfer step in which a communication is established between the communication device to which the new identification device is coupled, and an account center, which causes the account center to assign the account to the new identification device.
